# FASCICULE DE BREVET EUROPEEN

(11) **EP 1 462 166 B1**
(45) Date de publication et mention de la délivrance du brevet: **01.07.2009**
(21) Numéro de dépôt: 04290679.2
(22) Date de dépôt: 11.03.2004
(51) Int. Cl.: B01J 29/74, B01J 29/78, C10G 45/64

(54) **Catalyseur et son utilisation pour l'amélioration du point d'écoulement de charges hydrocarbonnées**
Katalysator und seine Verwendung zur Verbesserung des Fliesspunktes von Kohlenwasserstoffen
Catalyst and its use for improving the pour point of hydrocarbon feedstocks

(30) Priorité: 24.03.2003 FR 0303530
(43) Date de publication de la demande: 29.09.2004
(73) Titulaire: Institut Français du Pétrole, 92852 Rueil-Malmaison Cedex (FR)
(72) Inventeur: Benazzi, Eric, 78400 Chatou (FR); Guillon, Emmanuelle, 69230 St Genis Laval (FR); Martens, Johan, 3040 Huldenberg (BE)

(56) Documents cités:
- EP-A- 0 046 504
- WO-A-01/64339
- WO-A-02/48289
- WO-A-02/48290

## Description

La présente invention concerne un procédé pour améliorer le point d'écoulement de charges contenant des paraffines linéaires et/ou peu ramifiées, longues (plus de 10 atomes de carbone), en particulier pour convertir, avec un bon rendement, des charges possédant des points d'écoulement élevés en au moins une coupe présentant un point d'écoulement bas et un haut indice de viscosité pour les bases huiles.

La présente invention a également pour objet un catalyseur comportant au moins une zéolithe ZBM-30 synthétisée en présence d'un structurant triéthylènetétramine, au moins une matrice minérale poreuse, au moins un élément hydro-déshydrogénant, de préférence choisi parmi les éléments du groupe VIB et du groupe VIII de la classification périodique, et son utilisation pour la conversion des hydrocarbures et le procédé de réduction du point d'écoulement avec ce catalyseur.

### Art antérieur

Les lubrifiants de haute qualité sont d'une importance primordiale pour le bon fonctionnement des machines modernes, des automobiles, et des camions. Cependant, la quantité de paraffines issues directement du pétrole, non traitées, et possédant les propriétés adéquates pour constituer des bons lubrifiants est très faible par rapport à la demande croissante dans ce secteur.

Le traitement des fractions pétrolières lourdes à fortes teneurs en paraffines linéaires
ou peu ramifiées est nécessaire afin d'obtenir des huiles de base de bonne qualité et ce avec les meilleurs rendements possibles, par une opération qui vise à éliminer les paraffines linéaires ou très peu branchées, des charges qui seront ensuite utilisées en tant que huiles de base ou en tant que kérosène ou carburéacteur (jet fuel).

En effet, les paraffines de haut poids moléculaire qui sont linéaires ou très faiblement branchées et qui sont présentes dans les huiles ou dans le kérosène ou carburéacteur conduisent à des points d'écoulement hauts et donc à des phénomènes de figeage pour des utilisations à basse température. Afin de diminuer les valeurs des points d'écoulement, ces paraffines linéaires pas ou très peu branchées doivent être entièrement ou partiellement éliminées.

Cette opération peut s'effectuer par extraction par des solvants tels que le propane
ou la méthyl-éthyl cétone, on parle alors de déparaffinage au propane ou à la méthyl éthylcétone (MEK). Cependant, ces techniques sont coûteuses, longues et pas toujours aisées à mettre en oeuvre. Un autre moyen est le craquage sélectif des chaînes paraffiniques linéaires les plus longues qui conduit à la formation de composés de poids moléculaire plus faible dont une partie peut être éliminée par distillation.

Compte tenu de leur sélectivité de forme les zéolithes sont parmi les catalyseurs les plus utilisés. L'idée qui prévaut à leur utilisation est qu'il existe des structures zéolithiques dont les ouvertures de pores sont telles qu'elles permettent l'entrée dans leur microporosité des paraffines linéaires longues ou très peu branchées mais en excluent les paraffines ramifiées, les napthènes et les aromatiques. Ce phénomène conduit ainsi à un craquage sélectif des paraffines linéaires ou très peu branchées.

Des catalyseurs à base de zéolithes ayant des tailles de pores intermédiaires telles que les ZSM-5, ZSM-11, ZSM-12, ZSM-22, ZSM-23, ZSM-35 et ZSM-38 ont été décrits pour leur utilisation dans ces procédés notamment dans les brevets US-A-3 894 938 ; US-A-4 176 050 ; US-A-4 181 598 ; US-A-4 222 855 ; US-A-4 229 282 et US-A-4 247 388.

Des mélanges de zéolithes à larges pores et de ces zéolithes à pores intermédiaires utilisables dans un procédé de déparaffinage sont décrits dans la demande de brevet WO-A-02/08 8279.

Par ailleurs, il a été constaté que les procédés utilisant ces zéolithes (ZSM-5, ZSM-11, ZSM-12, ZSM-22, ZSM-23, ZSM-35 et ZSM-38) permettent d'obtenir des huiles par craquage de charges contenant des quantités de paraffines linéaires ou très peu branchées inférieures à 50 % poids. Cependant, pour des charges contenant des quantités supérieures de ces composés il est apparu que leur craquage conduit à la formation de quantités importantes de produits de poids moléculaires plus faibles, tels que du butane, propane, éthane et méthane, ce qui réduit considérablement le rendement en produits recherchés.

Pour pallier ces inconvénients, la demanderesse a porté ses efforts de recherche sur la mise au point de catalyseurs comportant au moins une zéolithe ZBM-30, au moins un élément hydro-déshydrogénant, de préférence choisi parmi les éléments du groupe VIB et du groupe VIII de la classification périodique. La demanderesse a alors découvert de manière surprenante que l'utilisation d'un catalyseur comportant au moins une zéolithe ZBM-30 synthétisée avec un structurant triéthylène tétramine permet d'abaisser le point d'écoulement de la charge tout en obtenant un haut indice de viscosité (VI) et en maintenant un bon rendement en produits désirés. De façon inattendue, en effet, le catalyseur préparé avec la zéolithe ZBM-30 synthétisée en présence du structurant triéthylènetétramine présente une activité et une sélectivité en déparaffinage (amélioration du point d'écoulement) plus importante que les solides à base de ZBM-30 synthétisés via d'autres structurants et que les formules catalytiques à base de zéolithes connues de l'art antérieur.

La présente invention propose un procédé catalytique pour la réduction du point d'écoulement à base de tels catalyseurs.

### Objet de l'invention

Un premier objet de l'invention est un catalyseur comportant au moins une zéolithe ZBM-30 synthétisée avec un structurant triéthylènetétramine, au moins un élément hydro-déshydrogénant, de préférence choisi parmi les éléments du groupe VIB et du groupe VIII de la classification périodique.

Un autre objet de l'invention est un procédé pour l'amélioration du point d'écoulement d'une charge hydrocarbonée, dans lequel la charge à traiter est mise au contact d'un catalyseur comportant au moins une zéolithe synthétisée avec un structurant particulier tel que le triéthylènetétramine, au moins un élément hydro-déshydrogénant, de préférence choisi parmi les éléments du groupe VIB et du groupe VIII de la classification périodique, au moins une matrice minérale poreuse. Ce procédé de déparaffinage est conduit à une température comprise entre 200 et 450 °C, une pression entre 0,1 et 25 MPa et une vitesse volumique horaire entre 0,05 et 30 h⁻¹, en présence d'hydrogène à raison de 50 à 2000 normaux litres d'hydrogène par litre de charge (NI/I).

La synthèse de la zéolithe ZBM-30 est décrite dans le brevet EP-A-46504.

De façon inattendue, ledit catalyseur présente une activité et une sélectivité en déparaffinage (amélioration du point écoulement) plus importante que les formules catalytiques à base de zéolithes (tamis moléculaire) connues dans l'art antérieur.

Avantageusement ce procédé permet de convertir une charge possédant un haut point d'écoulement en un produit possédant un point d'écoulement plus bas. Il est donc applicable pour la réduction du point d'écoulement des gazoles par exemple. Il permet également de diminuer le point d'écoulement de charges plus lourdes afin d'obtenir des bases huiles présentant de bonnes propriétés à froid et un haut indice de viscosité.

Les charges qui peuvent être traitées selon le procédé de l'invention sont avantageusement des fractions possédant des points d'écoulement relativement hauts dont on désire diminuer la valeur.

Des charges typiques qui peuvent être traitées avantageusement selon l'invention possèdent en général un point d'écoulement au dessus de 0 °C. Les produits résultant du traitement selon le procédé ont des points d'écoulement inférieurs à 0 °C et de préférence inférieurs à environ -10 °C.

Les charges qui peuvent être traitées selon le procédé de l'invention contiennent des paraffines, des oléfines, des naphtènes, des aromatiques et aussi éventuellement des composés azotés, soufrés et oxygénés organiques.

Les paraffines issues du procédé Fischer-Tropsch sont exclues.

L'utilisation du catalyseur selon l'invention dans les conditions décrites ci-dessus permet, notamment, la production de produits à faible point d'écoulement avec de bons rendements, et à haut indice de viscosité dans le cas des fractions les plus lourdes qui sont traitées dans un objectif de production de bases huiles.

### Description détaillée de l'invention

Le catalyseur selon l'invention comporte au moins une zéolithe ZBM-30 synthétisée avec un structurant triéthylène tétramine, au moins un élément hydro-déshydrogénant, de préférence choisi parmi les éléments du groupe VIB et du groupe VIII (de manière préférée les métaux nobles du groupe VIII) de la classification périodique et au moins une matrice minérale poreuse.

La synthèse de la zéolithe ZBM-30 est décrite dans le brevet EP-A-46 504.

La zéolithe ZBM-30 est synthétisée selon les méthodes décrites dans le brevet EP-A-46 504 selon le mode opératoire utilisant l'agent structurant triéthylènetétramine.

Le rapport Si/Al global des zéolithes entrant dans la composition des catalyseurs selon l'invention ainsi que la composition chimique des échantillons sont déterminés par fluorescence X et absorption atomique

Les rapports Si/Al des zéolithes décrites ci-dessus sont celles obtenues à la synthèse selon les modes opératoires décrits dans les différents documents cités ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques.

Les zéolithes entrant dans la composition des catalyseurs selon l'invention peuvent être calcinées et échangées par au moins un traitement par une solution d'au moins un sel d'ammonium de manière à obtenir la forme ammonium des zéolithes qui une fois calcinée conduisent à la forme hydrogène des dites zéolithes.

Les zéolithes entrant dans la composition du catalyseur selon l'invention sont au moins en partie, de préférence pratiquement totalement, sous forme acide, c'est-à-dire sous forme hydrogène (H⁺). Le rapport atomique Na/T est généralement inférieur à 10 % et de préférence inférieur à 5 % et de manière encore plus préférée inférieur à 1 %.

D'autre part, le catalyseur objet de l'invention contient au moins un élément hydro-déshydrogénant, de préférence choisi parmi les éléments du groupe VIB et du groupe VIII (c'est-à-dire métal ou composé) de la classification périodique et au moins une matrice minérale poreuse.

Dans le cas où l'élément est au moins un métal du groupe VIII, de préférence lorsqu'il s'agit d'au moins un métal noble et avantageusement d'un métal noble choisi dans le groupe formé par le platine et le palladium, il peut être introduit sur les zéolithes par exemple par imprégnation à sec, par échange ionique ou toute autre méthode connue de l'homme du métier, ou bien il peut être introduit sur la matrice.

Selon une première variante, préalablement à sa mise en forme la zéolithe précédemment décrite est soumise au dépôt d'au moins un métal du groupe VIII, de préférence choisi dans le groupe formé par le platine et le palladium.

La zéolithe est ensuite mise en forme par toute technique connue de l'homme de l'art. Elle peut en particulier être mélangé à une matrice, généralement amorphe, par exemple à une poudre humide de gel d'alumine. Le mélange est ensuite mis en forme, par exemple par extrusion au travers d'une filière.

La mise en forme peut être réalisée avec d'autres matrices que l'alumine, telles que par exemple la magnésie, les silice-alumines amorphes, les argiles naturelles (kaolin, bentonite, sepiolite, attapulgite), la silice, l'oxyde de titane, l'oxyde de bore, la zircone, les phosphates d'aluminium, les phosphates de titane, les phosphates de zirconium, le charbon et leurs mélanges. On préfère utiliser des matrices contenant de l'alumine, sous toutes ces formes connues de l'Homme du métier, et de manière encore plus préférée les alumines, par exemple l'alumine gamma. D'autres techniques que l'extrusion, telles que le pastillage ou la dragéification, peuvent être utilisées.

On peut aussi avantageusement utiliser des mélanges d'alumine et de silice, des mélanges d'alumine et de silice-alumine.

Les catalyseurs obtenus par la présente invention sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues.

Après l'étape de mise en forme, le produit obtenu est soumis à une étape de séchage puis à une étape de calcination.

Dans le cas où le métal hydrogénant appartient au groupe VIII, et de préférence est le Pt et/ou le Pd, il peut également et avantageusement être déposé sur le support après la mise en forme de la zéolithe exempte de métaux, par tout procédé connu de l'homme de l'art et permettant le dépôt du métal sur le tamis moléculaire. Dans ce cas le support est obtenu d'une manière analogue à celle décrite précédemment.

Dans la suite du texte on désignera par le terme support, la zéolithe (exempte de métaux), plus la matrice après mise en forme, séchage et calcination, par exemple tel que précédemment obtenue.

Pour déposer le métal sur la zéolithe, on peut utiliser la technique d'échange cationique avec compétition où le compétiteur est de préférence le nitrate d'ammonium, le rapport de compétition étant au moins égal à environ 20 et avantageusement d'environ 30 à 200. Dans le cas du platine ou du palladium, on utilise habituellement un complexe tétramine du platine ou un complexe tétramine du palladium : ces derniers se déposeront alors pratiquement en totalité sur la zéolithe. Cette technique d'échange cationique peut également être utilisée pour déposer directement le métal sur la poudre de tamis moléculaire, avant son mélange éventuel avec une matrice.

Le dépôt du métal (ou des métaux) du groupe VIII est suivi en général d'une calcination sous air ou oxygène, usuellement entre 300 et 600 °C durant 0,5 à 10 heures, de préférence entre 350 et 550 °C durant 1 à 4 heures. On peut procéder ensuite à une réduction sous hydrogène, généralement à une température comprise entre 300 et 600 °C pendant 1 à 10 heures, de préférence on opérera entre 350 et 550°C pendant 2 à 5 heures.

On peut également déposer le platine et/ou le palladium non plus directement sur la zéolithe, mais sur la matrice (par exemple le liant aluminique) du support, avant ou après l'étape de mise en forme, en mettant en oeuvre un échange anionique avec de l'acide hexachloroplatinique, de l'acide hexachloropalladique et/ou du chlorure de palladium en présence d'un agent compétiteur, par exemple l'acide chlorhydrique. En général après le dépôt de platine et/ou de palladium, le catalyseur est comme précédemment soumis à une calcination puis réduit sous hydrogène comme indiqué ci-dessus.

Le support du catalyseur de la présente invention renferme généralement les teneurs suivantes en matrice et zéolithes :
- 5 à 95 % poids, de préférence 10 à 90 % poids, de manière plus préférée de 15 à 85 % poids et de manière très préférée de 20 à 80 % poids de zéolithe ZBM-30,
- 5 à 95 %, de préférence de 10 à 90 %, de manière plus préférée de 15 à 85 % et de manière très préférée de 20 à 80 % poids d'au moins une matrice minérale poreuse amorphe ou mal cristallisée de type oxyde.

La teneur en métal(aux) noble(s) ainsi éventuellement introduit(s), exprimée en pourcent poids par rapport à la masse totale du catalyseur, est généralement inférieure à 5 %, de préférence inférieure à 3 %, de manière encore plus préférée inférieure à 2 % et généralement inférieure à 1 % poids.

Dans le cas où le catalyseur comporte un métal hydrogénant du groupe VIII de préférence un métal noble et avantageusement le platine et/ou le palladium, le catalyseur est généralement réduit dans le réacteur en présence d'hydrogène et dans des conditions bien connues de l'homme de l'art.

Dans le cas où le métal hydrogénant n'est pas un métal noble, les éléments du groupe VIB et du groupe VIII éventuellement introduits dans le catalyseur selon l'invention peuvent être présents en totalité ou partiellement sous la forme métallique et/ou oxyde et/ou sulfure.

Parmi les éléments du groupe VIB, le molybdène et le tungstène sont préférés.

Les sources d'élément du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels. On utilise de préférence les oxydes et les sels d'ammonium tels que le molybdate d'ammonium, l'heptamolybdate d'ammonium et le tungstate d'ammonium

Le catalyseur de la présente invention peut renfermer un métal non noble du groupe VIII et de préférence le cobalt et le nickel. D'une manière avantageuse on utilise les associations des éléments des groupes VI et VIII non noble suivantes : nickel-molybdène, cobalt-molybdène, fer-molybdène, fer-tungstène, nickel-tungstène, cobalt-tungstène, les associations préférées sont : nickel-molybdène, nickel-tungstène. Il est également possible d'utiliser des associations de trois métaux par exemple nickel-cobalt-molybdène.

Les sources d'élément du groupe VIII qui peuvent être utilisées sont bien connues de l'homme du métier. Par exemple, on utilisera les nitrates, les sulfates, les phosphates, les halogénures par exemple, chlorures, bromures et fluorures, les carboxylates par exemple acétates et carbonates.

Lorsque la fonction hydrogénante est assurée par un métal non noble du groupe VIII ou une association métal non noble du groupe VIII et d'un métal du groupe VIB,
- la composition du support constitué d'au moins une matrice et des zéolithes décrites dans l'invention est la même que celle décrite précédemment et,
- la teneur pondérale en au moins un élément choisi parmi les éléments du groupe VIB et du groupe VIII non nobles est comprise entre 0,1 et 60 %, de préférence entre 1 et 50 % et de manière encore plus préférée entre 2 et 40 %.

Généralement, afin de terminer la préparation du catalyseur, on laisse reposer le solide humide sous une atmosphère humide à une température comprise entre 10 et 80 °C, puis on sèche le solide humide obtenu à une température comprise entre 60 et 150 °C, et enfin on calcine le solide obtenu à une température comprise entre 150 et 800 °C, généralement entre 250 et 600 °C.

Les catalyseurs de la présente invention peuvent éventuellement être soumis à un traitement de sulfuration permettant de transformer, au moins en partie, les espèces métalliques en sulfure avant leur mise en contact avec la charge à traiter. Ce traitement d'activation par sulfuration est bien connu de l'homme du métier et peut être effectué par toute méthode déjà décrite dans la littérature.

Dans le cas des métaux non nobles, une méthode de sulfuration classique bien connue de l'homme du métier consiste à chauffer en présence ou sous flux d'un mélange hydrogéne/hydrogène sulfuré ou encore sous d'hydrogène sulfuré pur, à une température comprise entre 150 et 800 °C, de préférence entre 250 et 600 °C, généralement dans une zone réactionnelle à lit traversé.

### Chargés

Le procédé permet de convertir une charge possédant un haut point d'écoulement en un produit possédant un point d'écoulement plus bas. Il est donc applicable pour la réduction du point d'écoulement des gazoles par exemple. Il permet également de diminuer le point d'écoulement de charges plus lourdes afin d'obtenir des bases huiles présentant de bonnes propriétés à froid et un haut indice de viscosité.

Les charges hydrocarbonées traitées selon le procédé de l'invention sont avantageusement des fractions possédant des points d'écoulement relativement hauts dont on désire diminuer la valeur.

Des charges typiques qui peuvent être traitées avantageusement selon l'invention possèdent en général un point d'écoulement au dessus de 0 °C. Les produits résultant du traitement selon le procédé ont des points d'écoulement inférieurs à 0 °C et de préférence inférieurs à environ -10 °C.

Ces charges contiennent de préférence au moins 20 % volume de composés bouillant au-dessus de 340 °C, de préférence à au moins 350 °C et avantageusement à au moins 380 °C. Dans ce dernier exemple, cela ne signifie pas que le point d'ébullition est de 380 °C et plus, mais de 380 °C ou plus.

Le procédé selon l'invention est particulièrement adapté pour traiter des distillats paraffiniques tels que les distillats moyens qui englobent les gazoles, les kérosènes, les carburéacteurs, les distillats sous vide et toutes autres fractions dont le point d'écoulement et la viscosité doivent être adaptés pour rentrer dans le cadre des spécifications.

Les charges qui peuvent être traitées selon le procédé de l'invention contiennent des paraffines, des oléfines, des naphtènes, des aromatiques et aussi éventuellement des composés azotés, soufrés et oxygénés organiques.

La charge peut être aussi par exemple des distillats issus de la distillation directe du brut ou d'unités de conversion telles que le FCC, le coker ou la viscoréduction, ou provenant d'unités d'extraction d'aromatiques, ou provenant de désulfuration ou d'hydroconversion de RAT (résidus atmosphériques) et/ou de RSV (résidus sous vide), ou encore la charge peut être une huile désasphaltée, ou encore un résidu d'hydrocraquage par exemple issu d'une étape d'hydrocraquage, un distillat sous vide ayant subi une étape d'hydroraffinage, et de façon plus générale des bases pour huiles lubrifiantes, ou bien encore des poly-alpha-oléfines à haut point d'écoulement ou tout mélange des charges précédemment citées.

Les paraffines Fischer-Tropsch sont exclues.

La charge à traiter possède de préférence une teneur en composés azotés inférieure à environ 200 ppm poids et de préférence inférieure à 100 ppm poids. La teneur en soufre est inférieure à 1000 ppm poids, de préférence inférieure à 500 ppm et de manière encore plus préférée inférieure à 200 ppm poids. La teneur en métaux de la charge, tels que Ni ou V, est extrêmement réduite, c'est-à-dire inférieure à 50 ppm poids, de manière préférée inférieure à 10 ppm poids et de manière encore plus préférée inférieure à 2 ppm poids.

L'utilisation du catalyseur selon l'invention dans les conditions décrites ci-dessous permet, notamment, la production de produits à faible point d'écoulement avec de bons rendements, et à haut indice de viscosité dans le cas des fractions les plus lourdes qui sont traitées dans un objectif de production de bases huiles.

### Conditions opératoires

Les conditions opératoires dans lesquelles s'opère le procédé de déparaffinage catalytique de l'invention sont les suivantes:
- la température de réaction est comprise entre 200 et 450 °C et de préférence entre 200 et 430 °C, avantageusement 250-420 °C ;
- la pression est comprise entre 0,1 et 25 MPa et de préférence entre 1 environ et 20 MPa;
- la vitesse volumique horaire (vvh exprimée en volume de charge injectée par unité de volume de catalyseur et par heure) est comprise entre environ 0,05 et environ 30 et de préférence entre environ 0,1 et environ 20 h⁻¹ et de manière encore plus préférée entre environ 0,1 et environ 10 h⁻¹.

Le contact entre la charge et le catalyseur est réalisé en présence d'hydrogène. Le taux d'hydrogène utilisé et exprimé en litres d'hydrogène par litre de charge est compris entre 50 et environ 2000 litres d'hydrogène par litre de charge et de préférence entre 100 et 1500 normaux litres d'hydrogène par litre de charge.

### Mode de réalisation

Le procédé de déparaffinage catalytique selon l'invention peut être précédé d'une étape d'hydroisomérisation-hydroconversion en présence d'un catalyseur contenant au moins un métal noble déposé sur un support acide amorphe.

Cette étape d'hydroisomérisation-hydroconversion est éventuellement précédée d'une étape d'hydroraffinage, cette étape d'hydroraffinage pouvant être suivie d'une séparation intermédiaire.

L'étape d'hydroisomérisation-hydroconversion a lieu en présence d'hydrogène et en présence d'un catalyseur bifonctionnel comportant un support acide amorphe (de préférence une silice-alumine amorphe) et une fonction métallique hydro-déshydrogénante assurée par au moins un métal noble du groupe VIII.

Le support est dit amorphe, c'est-à-dire dépourvu de tamis moléculaire, et en particulier de zéolithe, ainsi que le catalyseur. Le support acide amorphe est avantageusement une silice-alumine amorphe mais d'autres supports sont utilisables. Lorsque il s'agit d'une silice-alumine, le catalyseur, généralement, ne contient pas d'halogène ajouté, autre que celui qui pourrait être introduit pour l'imprégnation, du métal noble par exemple. La silice-alumine peut-être obtenue par toute technique de synthèse connue de l'homme de l'art telles que les techniques de co-précipitation, de cogélification, etc.

Durant l'étape d'hydroisomérisation-hydroconversion, les molécules de la charge à traiter, par exemple les n-paraffines, en présence d'un catalyseur bifonctionnel subissent une isomérisation puis éventuellement un hydrocraquage pour conduire respectivement à la formation d'isoparaffines et de produits de craquage plus légers tels que les gasoils et le kérosène. La conversion des produits ayant des points d'ébullition supérieurs ou égal à la température d'ébullition initiale de la charge qui est d'au moins de 340 °C, voire 370 °C ou encore mieux d'au moins 380 °C, en produits à points d'ébullition inférieurs à la température initiale d'ébullition de la charge varie généralement entre 5 et 90 %, de préférence comprise entre 5 et 80 % mais est généralement de préférence inférieure à 80 % et encore mieux inférieure à 60 %.

Les caractéristiques du catalyseur d'hydroisomérisation-hydroconversion sont plus en détail :

Le support préféré utilisé pour l'élaboration du catalyseur de prétraitement par hydroisomérisation-hydroconversion décrit dans le cadre de ce brevet est composé de silice SiO₂ et d'alumine Al₂O₃. La teneur en silice du support, exprimée en pourcentage poids, est généralement comprise entre 1 et 95 %, avantageusement voire entre 5 et 95 % et de manière préférée entre 10 et 80 % et de manière encore plus préférée entre 20 et 70 % et entre 22 et 45 %. Cette teneur en silice est parfaitement mesurée à l'aide de la fluorescence X.

Pour ce type particulier de réaction, la fonction métallique est apportée par un métal noble du groupe VIII de la classification périodique des éléments et plus particulièrement le platine et/ou le palladium.

La teneur en métal noble, exprimée en pourcent poids de métal par rapport au catalyseur, est comprise entre 0,05 à 10 et plus préférentiellement comprise entre 0,1 et 5.

La répartition du métal noble représente la distribution du métal à l'intérieur du grain de catalyseur, le métal pouvant être bien ou mal dispersé. Ainsi, il est possible d'obtenir le platine mal réparti (par exemple détecté dans une couronne dont l'épaisseur est nettement inférieure au rayon du grain) mais bien dispersé c'est-à-dire que tous les atomes de platine, situés en couronne, seront accessibles aux réactifs. Dans notre cas, la répartition du platine est bonne c'est-à-dire que le profil du platine, mesuré d'après la méthode de la microsonde de Castaing, présente un coefficient de répartition supérieur à 0,1 et de préférence supérieur à 0,2.

La surface BET du support est comprise entre 100 m²/g et 500 m²/g et de préférence comprise entre 250 m²/g et 450m²/g et pour les supports à base de silice-alumine, de manière encore plus préférée entre 310 m²/g et 450 m²/g.

La préparation et la mise en forme du support, et en particulier de la silice-alumine est faite par des méthodes usuelles bien connues de l'homme de l'art. De façon avantageuse, préalablement à l'imprégnation du métal, le support pourra subir une calcination comme par exemple un traitement thermique à 300-750 °C (600 °C préféré) pendant 0,25-10 heures (2 heures préféré) sous 0-30 % volume de vapeur d'eau (pour la silice alumine 7,5 % préféré).

Le sel de métal noble est introduit par une des méthodes usuelles utilisées pour déposer le métal (de préférence du platine et/ou le palladium, le platine étant encore préféré) à la surface d'un support. Une des méthodes préférées est l'imprégnation à sec qui consiste en l'introduction du sel de métal dans un volume de solution qui est égal au volume poreux de la masse de catalyseur à imprégner. Avant l'opération de réduction, le catalyseur pourra subir une calcination comme par exemple un traitement sous air sec à 300-750 °C (520 °C préféré) pendant 0,25-10 heures (2 heures préféré).

Avant utilisation dans la réaction d'hydroisomérisation-conversion, le métal contenu dans le catalyseur doit être réduit. Une des méthodes préférées pour conduire la réduction du métal est le traitement sous hydrogène à une température comprise entre 150 et 650 °C et une pression totale comprise entre 0,1 et 25 MPa. Par exemple, une réduction consiste en un palier à 150 °C de 2 heures puis une montée en température jusqu'à 450 °C à la vitesse de 1 °C/min puis un palier de 2 heures à 450 °C; durant toute cette étape de réduction, le débit d'hydrogène est de 1000 litres hydrogène/ litre catalyseur. Notons également que toute méthode de réduction ex-situ est convenable.

Les conditions opératoires dans lesquelles est effectuée l'étape d'hydroisomérisation-hydroconversion sont importantes.

La pression sera maintenue entre 2 et 25 MPa et de préférence entre 3 et 20 MPa et avantageusement entre 2 et 18 MPa, la vitesse spatiale sera comprise entre 0,1 h⁻¹ et 10 h⁻¹, de préférence entre 0,2 et 10h⁻¹ et avantageusement entre 0,5 et 5,0h⁻¹. Le taux d'hydrogène est compris entre 100 et 2000 litres d'hydrogène par litre de charge et préférentiellement entre 150 et 1500 litres d'hydrogène par litre de charge.

La température utilisée dans cette étape est comprise entre 200 et 450 °C et préférentiellement entre 250 et 450 °C, avantageusement entre 300 et 450 °C, et encore plus avantageusement supérieure à 340 °C, par exemple comprise entre 320 et 450 °C.

Dans le cas où une étape d'hydroraffinage précède l'étape d'hydroisomérisation-hydroconversion, les deux étapes d'hydroraffinage et d'hydroisomérisation-conversion peuvent être réalisées sur les deux types de catalyseurs dans des (deux ou plusieurs) réacteurs différents, et/ou sur au moins deux lits catalytiques installés dans un même réacteur.

L'emploi du catalyseur ci-dessus décrit dans l'étape d'hydroisomérisation-hydroconversion a pour effet d'augmenter le taux d'isomérisation de la fraction lourde (340 °C⁺, ou encore 370 °C⁺ et mieux encore 380 °C⁺), de diminuer son point d'écoulement et d'augmenter son VI. Plus généralement, on constate que le traitement de l'étape d'hydroisomérisation-hydroconversion permet ensuite d'obtenir de meilleurs rendements en fraction huile déparaffinée qui va être obtenue dans l'étape de déparaffinage catalytique.

Dans un mode de réalisation, l'effluent issu de l'étape d'hydroisomérisation-conversion peut en totalité être traité dans le procédé de déparaffinage selon l'invention. Le mode de réalisation, avec passage dans l'étape de déparaffinage catalytique de la totalité de l'effluent de l'étape d'hydroisomérisation-hydroconversion, est économiquement intéressant, puisque une seule unité de distillation est utilisée à la fin du procédé. De plus, à la distillation finale (après déparaffinage catalytique ou traitements ultérieurs) un gasoil grand froid est obtenu.

Dans une variante, l'effluent issu de l'étape d'hydroisomérisation-hydroconversion pourra subir une séparation d'une partie au moins (et de préférence d'au moins une majeure partie) de gaz légers qui comprennent l'hydrogène et éventuellement aussi des composés hydrocarbonés à au plus 4 atomes de carbone. L'hydrogène peut être séparé préalablement.

Avantageusement dans un autre mode de réalisation, l'effluent issu de l'étape d'hydroisomérisation-hydroconversion est distillé de façon à séparer les gaz légers et également séparer au moins un résidu contenant les composés à point d'ébullition supérieur à au moins 340 °C. Il s'agit de préférence d'une distillation atmosphérique.

On peut avantageusement distiller pour obtenir plusieurs fractions (essence, kérosène, gazole par exemple), à point d'ébullition d'au plus 340 °C et une fraction (appelée résidu) à point d'ébullition initial supérieur à au moins 340 °C et mieux supérieur à 350 °C et de préférence d'au moins 370 °C ou 380 °C.

Selon une variante préférée de l'invention, cette fraction (résidu) sera ensuite traitée dans l'étape de déparaffinage catalytique, c'est à dire sans subir de distillation sous vide. Mais dans une autre variante, on peut utiliser une distillation sous vide.

D'une façon générale, on appelle dans ce texte distillats moyens, la (les) fraction(s) à point d'ébullition initial d'au moins 150 °C et final allant jusqu'avant le résidu, c'est-à-dire généralement jusqu'à 340 °C, 350 °C ou de préférence inférieur à 370 °C ou à 380 °C.

L'effluent issu de l'étape d'hydroisomérisation-hydroconversion peut subir, avant ou après distillation, d'autres traitements tel que par exemple une extraction d'une partie au moins des composés aromatiques.

Une partie au moins de l'effluent issu de l'étape d'hydroisomérisation-hydroconversion, effluent ayant éventuellement subi les séparations et/ou traitements décrits ci-dessus, est alors soumise au procédé de déparaffinage catalytique selon l'invention.

Notons que les composés bouillant au-dessus d'au moins 340 °C sont toujours soumis au déparaffinage catalytique.

L'effluent en sortie du procédé d'hydrodéparaffinage catalytique selon l'invention est avantageusement envoyé dans le train de distillation, qui intègre de préférence une distillation atmosphérique et une distillation sous vide, qui a pour but de séparer les produits de conversion de point d'ébullition inférieur à 340 °C et de préférence inférieur à 370 °C, (et incluant notamment ceux formés lors de l'étape d'hydrodéparaffinage catalytique), et de séparer la fraction qui constitue la base huile et dont le point initial d'ébullition est supérieur à au moins 340 °C et de préférence supérieur ou égal à 370 °C.

Par ailleurs, cette section de distillation sous vide permet de séparer les différents grades d'huiles.

De préférence, avant d'être distillé, l'effluent en sortie du procédé d'hydrodéparaffinage catalytique selon l'invention est, au moins en partie et de préférence, dans sa totalité, envoyé sur un catalyseur d'hydrofinishing (hydrofinition) en présence d'hydrogène de manière à réaliser une hydrogénation poussée des composés aromatiques éventuellement encore présents qui nuisent à la stabilité des huiles et des distillats. Cependant, l'acidité du catalyseur doit être suffisamment faible pour ne pas conduire à la formation de produit de craquage de point d'ébullition inférieur à 340 °C de manière à ne pas dégrader les rendements finaux notamment en huiles.

Le catalyseur utilisé dans cette étape d'hydrofinition comporte au moins un métal du groupe VIII et/ou au moins un élément du groupe VIB de la classification périodique. Les fonctions métalliques fortes : platine et/ou palladium, ou des combinaisons nickel-tungstène, nickel-molydbène seront avantageusement utilisées pour réaliser une hydrogénation poussée des aromatiques.

Ces métaux sont déposés et dispersés sur un support de type oxyde amorphe ou cristallin, tel que par exemple, les alumines, les silices, les silice-alumines.

Le catalyseur d'hydrofinition (HDF) peut aussi contenir au moins un élément du groupe VII A de la classification périodique des éléments. De façon préférée ces catalyseurs contiennent du fluor et/ou du chlore.

Les teneurs pondérales en métaux sont comprises entre 10 et 30 % dans le cas des métaux non-nobles et inférieures à 2 %, de manière préférée comprises entre 0,1 et 1,5 %, et de manière encore plus préférée entre 0,1 et 1,0 % dans le cas des métaux nobles.

La quantité totale d'halogène est comprise entre 0,02 et 30 % poids, avantageusement entre 0,01 et 15 %, ou encore plus avantageusement entre 0,01 à 10 %, de préférence 0,01 à 5 %.

On pourra citer parmi les catalyseurs utilisables dans cette étape d'hydrofinition, et conduisant à d'excellentes performances, et notamment pour l'obtention d'huiles médicinales, les catalyseurs contenant au moins un métal noble du groupe VIII (platine et VIII par exemple) et au moins un halogène (chlore et/ou fluor), la combinaison chlore et fluor étant préférée.

Les conditions opératoires dans lesquelles s'opère l'étape d'hydrofinition suivant éventuellement le procédé de déparaffinage catalytique selon l'invention sont les suivantes :
- la température de réaction est comprise entre 180 et 400 °C et de préférence entre 210 et 350 °C, avantageusement 230-320 °C ;
- la pression est comprise entre 0,1 et 25 MPa et de préférence entre 1,0 et 20 MPa ;
- la vitesse volumique horaire (wh exprimée en volume de charge injectée par unité de volume de catalyseur et par heure) est comprise entre environ 0,05 et environ 100 et de préférence entre environ 0,1 et environ 30 h⁻¹.

Le contact entre la charge et le catalyseur est réalisé en présence d'hydrogène. Le taux d'hydrogène utilisé et exprimé en litres d'hydrogène par litre de charge est compris entre 50 et environ 2000 litres d'hydrogène par litre de charge et de préférence entre 100 et 1500 litres d'hydrogène par litre de charge.

Avantageusement, la température de l'étape d'hydrofinition (HDF) est inférieure à la température de l'étape d'hydrodéparaffinage catalytique (HDPC). La différence T_{HDPC}-T_{HDF} est généralement comprise entre 20 et 200 °C, et de préférence entre 30 et 100 °C.
L'effluent en sortie d'HDF est alors envoyé dans le train de distillation.

Dans la variante du procédé selon l'invention incluant une étape préliminaire d'hydroconversion/hydroisomérisation, les huiles de base obtenues dans un procédé tel que décrit ci-dessus présentent un point d'écoulement inférieur à -10 °C, un VI supérieur à 95, de préférence supérieur à 110 et de manière encore plus préférée supérieur à 120, une viscosité d'au moins 3,0 cSt à 100 °C, une couleur ASTM inférieure à 1 et une stabilité aux UV telle que l'accroissement de la couleur ASTM est compris entre 0 et 4 et de préférence entre 0,5 et 2,5.

Le test de stabilité aux UV, adapté des procédés ASTM D925-55 et D1148-55, fournit une méthode rapide pour comparer la stabilité des huiles de lubrification exposées à une source de rayons ultraviolets. La chambre d'essai est constituée d'une enceinte métallique munie d'un plateau tournant qui reçoit les échantillons d'huiles. Une ampoule produisant les mêmes rayons ultraviolets que ceux de la lumière solaire et placée au sommet de la chambre d'essai est dirigée vers le bas sur les échantillons. Parmi les échantillons est incluse une huile standard à caractéristiques U.V connues. La couleur ASTM D1500 des échantillons est déterminée à t=0 puis après 45 h d'exposition à 55 °C. Les résultats sont transcrits pour l'échantillon standard et les échantillons de l'essai comme suit :
a) couleur initiale ASTM D1500,
b) couleur finale ASTM D1500,
c) accroissement de la couleur,
d) trouble,
e) précipité.

Un autre avantage de cette variante du procédé selon l'invention est qu'il est possible d'atteindre des teneurs en aromatiques très basses, inférieures à 2 % poids de préférence à 1 % poids et mieux inférieur à 0,05 % poids) et même d'aller jusqu'à la production des huiles blanches de qualité médicinale ayant des teneurs en aromatiques inférieures à 0,01 % poids. Ces huiles ont des valeurs d'absorbance UV à 275, 295 et 300 nanomètres respectivement inférieures à 0,8, 0,4 et 0,3 (méthode ASTM D2008) et une couleur Saybolt comprise entre 0 et 30.

De façon particulièrement intéressante donc, le procédé selon l'invention permet aussi d'obtenir des huiles blanches médicinales. Les huiles blanches médicales sont des huiles minérales obtenues par un raffinage poussé du pétrole, leur qualité est soumise à différentes réglementations qui visent à garantir leur innocuité pour des applications pharmaceutiques, elles sont dépourvues de toxicité et se caractérisent par leur densité et leur viscosité. Les huiles blanches médicinales comprennent essentiellement des hydrocarbures saturés, elles sont chimiquement inertes et leur teneur en hydrocarbures aromatiques est faible. Une attention particulière est portée aux composés aromatiques et notamment à 6 hydrocarbures aromatiques polycycliques (P.A.H. pour l'abréviation anglo-saxonne de polycyclic aromatic hydrocarbons) qui sont toxiques et présents à des concentrations d'une partie par milliard en poids de composés aromatiques dans l'huile blanche. Le contrôle de la teneur totale en aromatiques peut être effectué par la méthode ASTM D 2008, ce test d'adsorption UV à 275, 292 et 300 nanomètres permet de contrôler une absorbance inférieure respectivement à 0,8, 0,4 et 0,3 (c'est à dire que les huiles blanches ont des teneurs en aromatiques inférieures à 0,01 % en poids). Ces mesures sont effectuées avec des concentrations de 1g d'huile par litre, dans une cuve de 1 cm. Les huiles blanches commercialisées se différencient par leur viscosité mais aussi par leur brut d'origine qui peut être paraffinique ou naphténique, ces deux paramètres vont induire des différences à la fois dans les propriétés physico-chimiques des huiles blanches considérées mais aussi dans leur composition chimique.

Les exemples qui suivent illustrent l'invention sans toutefois en limiter la portée.

### Exemple 1 : Préparation du catalyseur C1 conforme à l'invention

Le catalyseur C1 comporte une zéolithe ZBM-30. Ce catalyseur est obtenu selon le mode opératoire décrit ci-après.

La zéolithe ZBM-30 est synthétisée selon le brevet BASF EP-A-46504 avec le structurant organique triéthylènetétramine.

La zéolithe ZBM-30 brute de synthèse est soumise à une calcination à 550 °C sous flux d'air sec durant 12 heures.

La zéolithe H-ZBM-30 (forme acide) ainsi obtenue possède un rapport Si/Al de 45.

La zéolithe est malaxée avec un gel d'alumine de type SB3 fourni par la société Condéa. La pâte malaxée est alors extrudée au travers d'une filière de diamètre 1,4 mm. Les extrudés ainsi obtenus sont calcinés à 500 °C durant 2 heures sous air. La teneur pondérale H-ZBM-30 est de 80 % poids.

Ensuite, les extrudés de support sont soumis à une étape d'imprégnation à sec par une solution aqueuse du sel de platine PT(NH₃)₄^{2⁺}, 2OH⁻. La teneur pondérale en platine du catalyseur C1 ainsi obtenu est de 0,52 %.

### Exemple 2 : Préparation d'un catalyseur C2 non conforme à l'invention

Le catalyseur C2 comporte une zéolithe ZBM-30. Ce catalyseur est obtenu selon le mode opératoire décrit ci-après.

La zéolithe ZBM-30 est synthétisée selon le brevet BASF EP-A-46504 avec le structurant organique hexaméthylènediamine.

La zéolithe ZBM-30 brute de synthèse est soumise à une calcination à 550 °C sous flux d'air sec durant 12 heures.

La zéolithe H-ZBM-30 (forme acide) ainsi obtenue possède un rapport Si/Al de 54.

La zéolithe est malaxée avec un gel d'alumine de type SB3 fourni par la société Condéa. La pâte malaxée est alors extrudée au travers d'une filière de diamètre 1,4 mm. Les extrudés ainsi obtenus sont calcinés à 500 °C durant 2 heures sous air. La teneur pondérale H-ZBM-30 est de 80 % poids.

Ensuite, les extrudés de support sont soumis à une étape d'imprégnation à sec par une solution aqueuse du sel de platine Pt(NH₃)₄^{2⁺}, 2OH- . La teneur pondérale en platine du catalyseur C2 ainsi obtenu est de 0,53 %.

### Exemple 3 : Préparation d'un catalyseur C3 non conforme à l'invention

Le catalyseur C3 comporte une zéolithe ZSM-48. Ce catalyseur est obtenu selon le mode opératoire décrit dans le volume 33 pages 282-284 de la série Studies in Surface Science and Catalysis. La zéolithe est ensuite soumise à une calcination sous flux d'air sec durant 12 heures à 550°C de manière à éliminer le structurant organique utilisé pour sa synthèse. La zéolithe ZSM-48 brute de synthèse est soumise à une calcination à 550°C sous flux d'air sec durant 12 heures. Le solide ZSM-48 obtenu est soumis à 4 échanges ioniques successifs dans une solution de NH4NO_{3,} 10N, à environ 100 °C pendant 4 heures pour chaque échange.

La zéolithe H-ZSM-48 (forme acide) ainsi obtenue possède un rapport Si/Al de 33.

La zéolithe est malaxée avec un gel d'alumine de type SB3 fourni par la société Condéa. La pâte malaxée est alors extrudée au travers d'une filière de diamètre 1,4 mm. Les extrudés ainsi obtenus sont calcinés à 500 °C durant 2 heures sous air. La teneur pondérale H-ZSM-48 est de 80 % poids.

Ensuite, les extrudés de support sont soumis à une étape d'imprégnation à sec par une solution aqueuse du sel de platine Pt(NH₃)₄^{2⁺}, 2OH⁻. La teneur pondérale en platine du catalyseur C3 ainsi obtenu est de 0,50 %.

### Exemple 4 : Utilisation du catalyseur C1 (conforme à l'invention) et C2 (non conforme à l'invention) pour l'amélioration du point d'écoulement d'un résidu d'hydrocraquage

Les catalyseurs C1 et C2 dont les préparations sont respectivement décrites dans les exemples 1 et 2 sont utilisés pour préparer une base huile à partir de la charge décrite Tableau 1 ci-après qui est un résidu d'hydrocraquage issu d'un distillat sous vide.

**Tableau 1**

| Caractéristiques de la charge | |
|---|---|
| Teneur en soufre (ppm poids) | 8 |
| Teneur en azote (ppm poids) | 1 |
| Point d'écoulement (°C) | + 40 |
| Point initial | 281 |
| 10 % | 348 |
| 50 % | 418 |
| 90 % | 505 |
| Point final | 583 |

Les catalyseurs sont préalablement réduits sous hydrogène à 450 °C avant le test catalytique in situ dans le réacteur. Cette réduction s'effectue par paliers. Elle consiste en un palier à 150 °C de 2 heures, puis une montée en température jusqu'à 450 °C à la vitesse de 1 °C/min, puis un palier de 2 heures à 450 °C. Durant ce protocole de réduction, le débit d'hydrogène est de 1000 litres d'hydrogène par litre de catalyseur.

La réaction a lieu à 330 °C, sous une pression totale de 12 MPa, une vitesse volumique horaire 1 h⁻¹ et un débit d'hydrogène de 1000 litres d'hydrogène par litre de charge.

Les caractéristiques de l'huile obtenue, fraction 380 °C⁺, sont reportées dans le Tableau 2, ci-après.

**Tableau 2**

| | Catalyseur C1. | Catalyseur C2 |
|---|---|---|
| Indice de Viscosité VI de la fraction 380 °C⁺ | 131 | 129 |
| Point d'écoulement de la fraction 380 °C⁺ (°C) | -20 | -20 |
| Rendement Huile (380 °C⁺) (% poids) | 80,6 | 79,2 |

Ces exemples montrent tout l'intérêt d'utiliser le catalyseur C1 selon l'invention synthétisé en présence de triéthylène tétramine, qui permet d'abaisser de manière plus importante le point d'écoulement de la charge initiale, dans ce cas un résidu d'hydrocraquage, tout en obtenant un haut indice de viscosité (VI).

### Exemple 5 : Utilisation du catalyseur C1 (conforme à l'invention) et C3 (non conforme à l'invention) pour l'amélioration du point d'écoulement d'un résidu d'hydrocraquage

Les catalyseurs C1 et C3 dont les préparations sont respectivement décrites dans les exemples 1 et 3 sont utilisés pour préparer une base huile à partir de la charge décrite dans le tableau ci-après, qui est un résidu d'hydrocraquage issu d'un distillat sous vide.

**Tableau 3**

| Caractéristiques de la charge | |
|---|---|
| Teneur en soufre (ppm poids) | 8 |
| Teneur en azote (ppm poids) | 1 |
| Point d'écoulement (°C) | + 40 |
| Point initial | 281 |
| 10 % | 348 |
| 50 % | 418 |
| 90 % | 505 |
| Point final | 583 |

Les catalyseurs sont préalablement réduits sous hydrogène à 450 °C avant le test catalytique in situ dans le réacteur. Cette réduction s'effectue par paliers. Elle consiste en un palier à 150 °C de 2 heures, puis une montée en température jusqu'à 450 °C à la vitesse de 1 °C/min, puis un palier de 2 heures à 450 °C. Durant ce protocole de réduction, le débit d'hydrogène est de 1000 litres d'hydrogène par litre de catalyseur.

La réaction a lieu à 330 °C, sous une pression totale de 12 MPa, une vitesse volumique horaire 1 h⁻¹ et un débit d'hydrogène de 1000 litres d'hydrogène par litre de charge.

Les caractéristiques de l'huile obtenue, fraction 380 °C⁺, sont reportées dans le Tableau 4, ci-après.

**Tableau 4**

| | Catalyseur C1 | Catalyseur C3 |
|---|---|---|
| Indice de Viscosité VI de la fraction 380 °C⁺ | 131 | 127 |
| Point d'écoulement de la fraction 380 °C⁺ (°C) | -20 | -19 |
| Rendement Huile (380 °.C⁺) (% poids) | 80,6 | 78,9 |

Ces exemples montrent tout l'intérêt d'utiliser le catalyseur C1 selon l'invention à base de ZBM-30 synthétisée en présence de triéthylène tétramine, qui permet d'abaisser de manière plus importante le point d'écoulement de la charge initiale, dans ce cas un résidu d'hydrocraquage, tout en obtenant un haut indice de viscosité (VI).

### Exemple 6 : Préparation du catalyseur C4 de prétraitement par hydroconversion-hydroisomérisation de la charge soumise au déparaffinage

Le catalyseur de prétraitement par hydroconversion-hydroisomérisation C4 est préparé à partir d'un support silice-alumine utilisée sous forme d'extrudés. Elle contient 40 % poids de silice (SiO₂) et 60 % poids d'alumine (Al₂O₃). La silice-alumine avant ajout du métal noble, présente une surface de 332 m²/g et son volume poreux total est de 0,82 ml/g.

Le catalyseur C4 est obtenu après imprégnation du métal noble sur le support. Le sel de platine H₂PtCl₆ est dissous dans un volume de solution correspondant au volume poreux total à imprégner. Le solide est ensuite calciné pendant 2 heures sous air à 500 °C. La teneur en platine est de 0,48 % poids. Mesurée sur le catalyseur, la surface BET est égale à 310 m²/g. La dispersion du platine mesurée par titrage H₂/O₂ est de 75 %.

### Exemple 7 : Utilisation du catalyseur C1 (conforme à l'invention) pour l'amélioration du point d'écoulement d'un résidu d'hydrocraquage prétraité sur le catalyseur C4

Le catalyseur dont la préparation est décrite dans l'exemple 6 est utilisé afin de prétraiter une charge qui est un VGO préalablement hydroraffiné dans le but d'obtenir des bases huiles. Afin de pouvoir directement utiliser les catalyseurs d'étape de prétraitement, la charge a donc été préalablement hydroraffinée et les principales caractéristiques de la charge obtenues sont reportées dans le tableau 5 ci-après.

**Tableau 5**

| Caractéristiques de la charge | |
|---|---|
| Teneur en Soufre (ppm poids) | 3 |
| Teneur en Azote (ppm poids) | 1 |
| Distillation : | |
| - point initial | 335 °C |
| - point 10 % | 397 °C |
| - point 50 % | 459 °C |
| - point 90 % | 537 °C |
| - point final | 600 °C |
| Point d'écoulement | + 42 °C |
| VI après déparaffinage au solvant Méthylisobutylcétone (MI BC) (-20 °C) | 105 |

Cette charge a été utilisée pour évaluer le catalyseur C4 et préparer la charge qui sera ensuite hydrodéparaffinée catalytiquement sur le catalyseur C1.

L'unité de test catalytique comprend un réacteur en lit fixe, à circulation ascendante de la charge ("up-flow"), dans lequel est introduit 80 ml de catalyseur C4. Ce catalyseur est alors soumis à une atmosphère d'hydrogène pur à une pression de 12 MPa afin d'assurer la réduction de l'oxyde de platine en platine métallique puis la charge est enfin injectée. La pression totale est de 12 MPa, le débit d'hydrogène est de 1000 litres d'hydrogène gazeux par litre de charge injectée, la vitesse volumique horaire est de 0,9 h⁻¹ et la température de réaction de 345 °C. Après réaction, les effluents sont fractionnés en produits légers (essence Pl-150 °C), distillats moyens (150-380 °C) et résidu (380 °C)^{+.}

La conversion nette de la charge en produits ayant des points d'ébullition inférieurs à 380 °C obtenue dans ces conditions est de 28 % poids. Le VI de la fraction 380 °C⁺ ainsi obtenu et après déparaffinage au solvant (-20 °C) par la méthyl-isobutylcétone (MIBC) est de 122 soit une augmentation du VI de 17 points par rapport à la charge initiale. En revanche le point d'écoulement de la fraction 380 °C⁺ n'a été que faiblement diminué puisqu'il s'établit à une valeur de +39 °C contre +42 °C initialement.

La fraction 250-380 °C qui correspond à une coupe gazole et qui résulte de l'étape de prétraitement convertissant du résidu d'hydrocraquage présente un point d'écoulement de -18 °C et un indice de cétane de 57, ce qui en fait un excellent gazole.

Le résidu (fraction 380 °C⁺) préparé ci-dessus est alors déparaffiné et hydrofini dans une unité comportant deux réacteurs à lit fixe à circulation ascendante de la charge ("up-flow")

Dans le premier réacteur on introduit 80 ml du catalyseur C1 d'hydrodéparaffinage préparé dans l'exemple 1 et dans le second réacteur on introduit un catalyseur d'hydrofinition contenant 1 % poids de Pt, 1 % poids F et 1 % poids de Cl sur l'alumine.

Les catalyseurs sont alors soumis à une atmosphère d'hydrogène pur à une pression de 12 MPa afin d'assurer la réduction de l'oxyde de platine en platine métallique puis la charge (fraction 380 °C⁺ produite dans l'exemple 4) est injectée.

La pression totale est de 12 MPa, le débit d'hydrogène est de 1000 litres d'hydrogène gazeux par litre de charge injectée, la vitesse volumique horaire dans le premier réacteur contenant C4 est de 1,1 h⁻¹ et la température de réaction de 330 °C et dans le second réacteur, contenant le catalyseur d'hydrofinition la pression totale est la même aux pertes de charge près, la température de réaction est 220 °C et la totalité de l'effluent issu du premier réacteur circule à une vitesse spatiale de 0,5h-1.

Après réaction, les effluents sont fractionnés en produits légers (essence Pl-150 °C), distillats moyens (150-380 °C) et résidu (380 °C⁺).

L'effluent est récupéré puis est distillé sous vide. Les rendements en fraction huile (fraction 380 °C⁺) ainsi que les caractéristiques du résidu 380 °C⁺ sont reportées dans le tableau 6 pour la charge, pour la fraction 380 °C⁺ issue de l'étape de prétraitement convertissant et pour la fraction 380 °C⁺ issue de l'étape de déparaffinage catalytique et d'hydrofinition.

**Tableau 6**

| | 1 | 2 | 3 |
|---|---|---|---|
| | Charge = Résidu d'hydrocraquage | Etape (a) (Etape de prétraitement) | Etape (b) + hydrofinition (hydrodéparaffinage + hydrofinition catalytiques) |
| Température de réaction (°C) | / | 345 | 325 220 |
| Ptotale (bars) | | 120 | 120 120 |
| Conversion en 380 °C- (% poids) | / | 32 | / |
| Soufre (ppm poids) | 3 | / | / |
| Azote (ppm poids) | 1 | / | / |
| **Fraction 380 °C⁺** | | | |
| Point d'écoulement (°C) | +42 | +39 | -21 |
| **Fraction 380 °C⁺ après traitement** | **Fraction 380 °C⁺ du résidu d'hydrocraquage déparaffiné au solvant** | **Fraction 380 °C⁺ hydroisomérisée et déparaffinée au solvant** | **Fraction 380 °C⁺ hydroisomérisée, déparaffinée et hydrofinie catalytiquement** |
| VI | 105 | 122 | 121 |
| Point d'écoulement (°C) | -20 | -20 | -22 |
| Couleur Saybolt | / | / | +30 |
| Absorption UV (D2008) | | / | |
| 260-280 nm | / | / | 0,0006 |
| 280-290 nm | / | / | 0,0004 |
| 290-300 nm | / | / | 0,0003 |
| 300-360 nm | / | / | 0,0002 |
| 360-400 nm | / | / | <0,0001 |
| 300-330 nm | / | / | 0,0002 |
| 330-350nm | / | / | <0,0001 |

Cet exemple met en évidence que la combinaison d'une étape de prétraitement par hydroconversion-hydroisomérisation (étape a) et d'une étape de déparaffinage catalytique suivie d'une hydrofinition, conduit à des produits de qualité élevée. En particulier il montre que l'étape (a) permet d'augmenter l'indice de viscosité de la fraction huile (380 °C⁺) de 105 à 122 sans abaisser suffisamment le point d'écoulement (tableau 6, colonnes 1 et 2). Cet abaissement est réalisé durant l'étape (b) sur le catalyseur de déparaffinage catalytique qui permet d'atteindre un point d'écoulement de -22 °C ainsi qu'une couleur Saybolt de +30 qui confère au produit la qualité d'huile médicinale (tableau 6, colonnes 2 et 3).

## Revendications

1. Catalyseur comportant au moins une zéolithe ZBM-30 synthétisée avec le structurant triéthylènetétramine, au moins un élément hydro-déshydrogénant, et au moins une matrice minérale poreuse.

2. Catalyseur selon la revendication 1 dans lequel l'élément hydro-déshydrogénant est choisi parmi les éléments du groupe VIB et du groupe VIII de la classification périodique.

3. Catalyseur selon la revendication 2 dans lequel l'élément hydro-déshydrogénant du groupe VIB est le molybdène et/ou le tungstène.

4. Catalyseur selon l'une des revendications 1 à 3 dans lequel l'élément hydro-déshydrogénant du groupe VIII est un métal noble du groupe VIII.

5. Catalyseur selon la revendication 4 dans lequel l'élément hydro-déshydrogénant du groupe VIII est le platine et/ou le palladium.

6. Catalyseur selon l'une des revendications précédentes soumis à un traitement de sulfuration.

7. Procédé pour l'amélioration du point d'écoulement d'une charge paraffinique dans lequel la charge à traiter est mise au contact d'un catalyseur de déparaffinage comprenant au moins une zéolithe ZBM-30 synthétisée avec le structurant triéthylènetétramine, au moins un élément hydro-déshydrogénant et au moins une matrice poreuse.

8. Procédé selon la revendication 7 dans lequel les charges traitées possèdent au moins 20 % volume de composés bouillant au-dessus de 340 °C.

9. Procédé selon l'une des revendications 7 à 8 dans lequel les conditions opératoires sont les suivantes :
- la température de réaction est comprise entre 200 et 450 °C.
- la pression est comprise entre 0,1 et 25 MPa.
- la vitesse volumique horaire (wh exprimée en volume de charge injectée par unité de volume de catalyseur et par heure) est comprise entre environ 0,05 et environ 30 h⁻¹.

10. Procédé selon l'une des revendications 7 à 9 dans lequel la charge subit préalablement une étape d'hydroisomérisation-hydroconversion.

11. Procédé selon la revendication 10 dans lequel l'effluent issu de l'étape d'hydroisomérisation-conversion est envoyé en totalité sur le catalyseur de déparaffinage.

12. Procédé selon l'une des revendications 10 à 11 dans lequel l'étape d'hydroisomérisation-hydroconversion est précédée d'une étape d'hydroraffinage.

13. Procédé selon la revendication 12 dans lequel l'étape d'hydroraffinage est suivie d'une séparation intermédiaire.

14. Procédé selon l'une des revendications 7 à 13 dans lequel l'effluent en sortie de l'étape d'hydrodéparaffinage catalytique est au moins en partie envoyé sur un catalyseur d'hydrofinition.

## Claims

1. Catalyst comprising at least one ZBM-30 zeolite synthesized with the structuring agent triethylenetetramine, at least one hydro-dehydrogenating element, and at least one porous mineral matrix.

2. Catalyst according to claim 1 in which the hydro-dehydrogenating element is chosen from the elements of Group VIB and Group VIII of the periodic table.

3. Catalyst according to claim 2 in which the hydro-dehydrogenating element of Group VIB is molybdenum and/or tungsten.

4. Catalyst according to one of claims 1 to 3 in which the hydro-dehydrogenating element of Group VIII is a noble metal of Group VIII.

5. Catalyst according to claim 4 in which the hydro-dehydrogenating element of Group VIII is platinum and/or palladium.

6. Catalyst according to one of the preceding claims subjected to sulphurization treatment.

7. Process for improving the pour point of a paraffin charge, in which the charge to be treated is brought into contact with a dewaxing catalyst comprising at least one ZBM-30 zeolite synthesized with the structuring agent triethylenetetramine, at least one hydro-dehydrogenating element and at least one porous matrix.

8. Process according to claim 7 in which the treated charges contain at least 20% by volume of compounds boiling above 340°C.

9. Process according to one of claims 7 to 8 in which the operating conditions are the following:
- the reaction temperature is between 200 and 450°C,
- the pressure is between 0.1 and 25 MPa,
- the hourly volume rate (hvr expressed as volume of charge injected per volume unit of catalyst per hour) is between approximately 0.05 and approximately 30h⁻¹.

10. Process according to one of claims 7 to 9 in which the charge undergoes a hydroisomerization-hydroconversion stage beforehand.

11. Process according to claim 10 in which all of the effluent from the hydroisomerization-conversion stage is sent to the dewaxing catalyst.

12. Process according to one of claims 10 to 11 in which the hydroisomerization-hydroconversion stage is preceded by a hydrorefining stage.

13. Process according to claim 12 in which the hydrorefining stage is followed by an intermediate separation.

14. Process according to one of claims 7 to 13 in which the effluent from the catalytic hydrodewaxing stage is at least partly sent to a hydrofinishing catalyst.

## Patentansprüche

1. Katalysator, der mindestens einen Zeolithen ZBM-30, der mit dem Strukturmittel Triethylentetraamin synthetisiert wurde, mindestens ein hydrerendes-dehydrierendes Element und mindestens eine poröse Mineralmatrix umfasst.

2. Katalysator nach Anspruch 1, wobei das hydrierendes-dehydrierende Element ausgewählt ist aus den Elementen der Gruppe VIB und der Gruppe VIII des Periodensystems der Elemente.

3. Katalysator nach Anspruch 2, wobei das hydrierendes-dehydrierende Element der Gruppe VIB Molybdän und/oder Wolfram ist.

4. Katalysator nach einem der Ansprüche 1 bis 3, wobei das hydrierendedehydrierende Element der Gruppe VIII ein Edelmetall der Gruppe VIII ist.

5. Katalysator nach Anspruch 4, wobei das -dehydrierende Element der Gruppe VIII Platin und/oder Palladium ist.

6. Katalysator nach einem der vorhergehenden Ansprüche, der einer Schwefelungsbehandlung unterzogen wird.

7. Verfahren zur Verbesserung des Fliesspunkts einer Paraffinbeschickung, wobei die zu behandelnde Beschickung mit einem Entparaffinierungskatalysator in Kontakt gebracht wird, der mindestens einen Zeolithen ZBM-30, der mit dem Strukturmittel Triethylentetraamin synthetisiert wurde, mindestens ein hydrierendes-dehydrierendes Element und mindestens eine poröse Matrix umfasst.

8. Verfahren nach Anspruch 7, wobei die behandelten Beschickungen mindestens 20 Vol.-% Verbindungen aufweisen, die oberhalb von 340 °C sieden.

9. Verfahren nach einem der Ansprüche 7 bis 8, wobei die Betriebsbedingungen Folgende sind:
- die Reaktionstemperatur liegt im Bereich zwischen 200 und 450 °C.
- der Druck liegt im Bereich zwischen 0,1 und 25 MPa.
- die Raumgeschwindigkeit je Stunde (HSV, ausgedrückt als Volumen der injizierten Beschickung je Volumeneinheit des Katalysators und je Stunde) liegt im Bereich zwischen etwa 0,05 und etwa 30 h⁻¹.

10. Verfahren nach einem der Ansprüche 7 bis 9, wobei die Beschickung zuvor einem Schritt der Hydroisomerisierung-Hydrokonversion unterzogen wird.

11. Verfahren nach Anspruch 10, wobei der Abfluss, der aus dem Schritt der Hydroisomerisierung-Konversion stammt, in seiner Gesamtheit auf den Entparaffinierungskatalysator geschickt wird.

12. Verfahren nach einem der Ansprüche 10 bis 11, wobei dem Schritt der Hydroisomerisierung-Hydrokonversion ein Schritt der hydrierenden Raffination vorausgeht.

13. Verfahren nach Anspruch 12, wobei auf den Schritt der hydrierenden Raffination eine intermediäre Trennung folgt.

14. Verfahren nach einem der Ansprüche 7 bis 13, wobei der Abfluss am Ausgang des Schritts der katalytischen Hydroentparaffinierung mindestens zum Teil auf einen Hydrofinishing-Katalysator geschickt wird.
